# EUROPÄISCHE PATENTANMELDUNG

(11) **EP 1 580 217 A1**
(43) Veröffentlichungstag der Anmeldung: **28.09.2005**
(21) Anmeldenummer: 05005344.6
(22) Anmeldetag: 11.03.2005
(51) Int. Cl.: C08G 83/00, C08G 61/00, C08G 61/12

(54) **Makromolekulare Verbindungen mit Kern-Schale-Struktur**

(30) Priorität: 25.03.2004 DE 102004014621
(71) Anmelder: H.C. Starck GmbH, 38642 Goslar (DE)
(72) Erfinder: Kirchmeyer, Stephan Dr., 51375 Leverkusen (DE); Ponomarenko, Sergei Dr., 107589 Moskau (RU); Muzafarov, Aziz Prof., 121615 Moskau (RU)
(74) Vertreter: Bramer-Weger, Elmar

(57) **Zusammenfassung**

Die Erfindung betrifft makromolekulare Verbindungen mit einer Kern-Schale-Struktur, ein Verfahren zu deren Herstellung sowie ihre Verwendung als Halbleiter in elektronischen Bauelementen.

## Beschreibung

Die Erfindung betrifft makromolekulare Verbindungen, die eine Kern-Schale-Struktur aufweisen, ein Verfahren zu deren Herstellung sowie ihre Verwendung als Halbleiter in elektronischen Bauelementen.

Das Feld molekularer Elektronik hat sich in den letzten 15 Jahren mit der Entdeckung organischer leitender und halbleitender Verbindungen rapide entwickelt. In dieser Zeit wurden eine Vielzahl von Verbindungen gefunden, die halbleitende oder elektrooptische Eigenschaften aufweisen. Es ist allgemeines Verständnis, dass die molekulare Elektronik nicht konventionelle Halbleiterbausteine auf der Basis von Silizium verdrängen wird. Stattdessen geht man davon aus, dass molekulare elektronische Bauelemente sich neue Anwendungsgebiete eröffnen werden, in denen die Eignung zur Beschichtung großer Flächen, strukturelle Flexibilität, Prozessierbarkeit bei niedrigen Temperaturen und niedrigen Kosten benötigt werden. Halbleitende organische Verbindungen werden derzeit für Anwendungsgebiete wie organische Feld-Effekt-Transistoren (OFET's), organische Lumineszenzdioden (OLED's), Sensoren und photovoltaische Elemente entwickelt. Durch einfache Strukturierung und Integration von OFET's in integrierte organische Halbleiterschaltungen werden preiswerte Lösungen für intelligente Karten (smart cards) oder Preisschilder möglich, die sich bislang mit Hilfe der Silzium-Technologie aufgrund des Preises und der mangelnden Flexibilität der Siliziumbausteine nicht realisieren lassen. Ebenfalls könnten OFET's als Schaltelemente in großflächigen flexiblen Matrixanzeigen verwendet werden. Eine Übersicht über organische Halbleiter, integrierte Halbleiterschaltungen und deren Anwendungen ist beispielweise in Electronics 2002, Band 15, S. 38 beschrieben.

Ein Feldeffekttransistor ist ein Dreielektroden-Element, in dem die Leitfähigkeit eines dünnen Leitungskanals zwischen zwei Elektroden (genannt "Source" und "Drain") mittels einer an der dritten, durch eine dünne Isolatorschicht von dem Leitungskanal getrennten, Elektrode (genannt "Gate") kontrolliert wird. Die wichtigsten charakteristischen Eigenschaften eines FeldeffektTransistors sind die Mobilität der Ladungsträger, die entscheidend die Schaltgeschwindigkeit des Transistors bestimmen und das Verhältnis zwischen den Strömen im geschalteten und ungeschalteten Zustand, das sogenannte "On/Off-ratio".

In organischen Feldeffekt-Transistoren sind bislang zwei große Klassen von Verbindungen verwendet worden. Sämtliche Verbindungen weisen fortlaufende konjugierte Einheiten auf und werden je nach Molekulargewicht und Aufbau in konjugierte Polymere und konjugierte Oligomere unterteilt.

Oligomere weisen in der Regel eine einheitliche molekulare Struktur und ein Molekulargewicht unter 10000 Dalton auf. Polymere bestehen in der Regel aus Ketten einheitlicher Repetitionseinheiten mit einer Molekulargewichtsverteilung. Jedoch besteht ein fließender Übergang zwischen Oligomeren und Polymeren.

Häufig wird mit der Unterscheidung zwischen Oligomeren und Polymeren zum Ausdruck gebracht, dass in der Verarbeitung dieser Verbindungen eine grundsätzliche Unterscheidung besteht. Oligomere sind häufig verdampfbar und werden über Aufdampfverfahren auf Substrate aufgebracht. Als Polymere werden häufig unabhängig von ihrer molekularen Struktur Verbindungen bezeichnet, die nicht mehr verdampfbar sind und daher über andere Verfahren aufgebracht werden. Bei Polymeren werden in der Regel Verbindungen angestrebt, die in einem flüssigen Medium, beispielsweise organischen Lösungsmitteln, löslich sind und sich dann über entsprechende Auftragsverfahren aufbringen lassen. Ein sehr verbreitetes Auftragsverfahren ist z.B. das Aufschleuderverfahren ("Spin-Coating"). Eine besonders elegante Methode ist das Aufbringen von halbleitenden Verbindungen über das Ink-Jet-Verfahren. In diesem Verfahren wird eine Lösung der halbleitenden Verbindung in Form feinster Tröpfchen auf das Substrat aufgebracht und getrocknet. Dieses Verfahren erlaubt während des Aufbringens die Strukturierung durchzuführen. Eine Beschreibung dieses Aufbringverfahrens für halbleitende Verbindungen ist beispielsweise in Nature, Band 401, S. 685 beschrieben.

Allgemein wird den nasschemischen Verfahren ein größeres Potenzial zugeschrieben, auf einfache Art und Weise zu preisgünstigen organischen integrierten Halbleiterschaltungen zu kommen.

Eine wichtige Voraussetzung zur Herstellung hochwertiger organischer Halbleiterschaltungen sind Verbindungen extrem hoher Reinheit. In Halbleitern spielen Ordnungsphänomene eine große Rolle. Behinderung an einheitlicher Ausrichtung der Verbindungen und Ausprägungen von Korngrenzen führt zu einem dramatischen Abfall der Halbleitereigenschaften, so dass organische Halbleiterschaltungen, die unter Verwendung nicht extrem hochreiner Verbindungen gebaut wurden, in der Regel unbrauchbar sind. Verbleibende Verunreinigungen können beispielsweise Ladungen in die halbleitende Verbindung injizieren ("Dotierung") und damit das On/Off-Ratio verkleinern oder als Ladungsfallen dienen und damit die Mobilität drastisch herabsetzen. Weiterhin können Verunreinigungen die Reaktion der halbleitenden Verbindungen mit Sauerstoff initiieren und oxidierend wirkende Verunreinigungen können die halbleitenden Verbindungen oxidieren und somit möglicher Lager-, Verarbeitungs- und Betriebszeiten verkürzen.

Die in der Regel notwendige Reinheit sind so hoch, dass sie durch die bekannten polymerchemischen Verfahren wie Waschen, Umfällen und Extraktion in der Regel nicht erreichbar ist.

Oligomere können dagegen als molekular einheitliche und häufig flüchtige Verbindungen relativ einfach durch Sublimation oder Chromatographie gereinigt werden.

Einige wichtige Vertreter halbleitender Polymere sind im Folgenden beschrieben. Für Polyfluorene und Fluoren-copolymere, beispielsweise Poly(9,9-dioctylfluoren-co-bithiophen) (I) 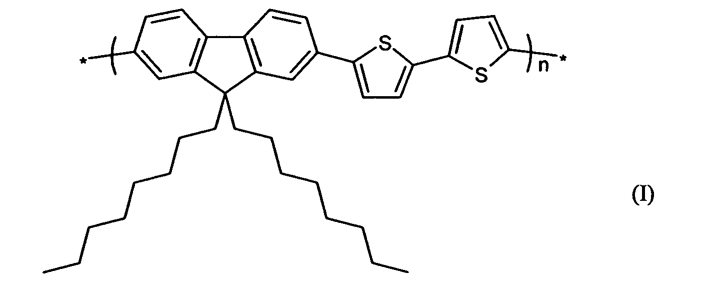 wurden Ladungsmobilitäten, im Folgenden auch kurz als Mobilitäten bezeichnet, bis 0,02 cm²/Vs erreicht (Science, 2000, Band 290, S. 2123), mit regioregulärem Poly(3-hexylthiophen-2,5-diyl) (II) 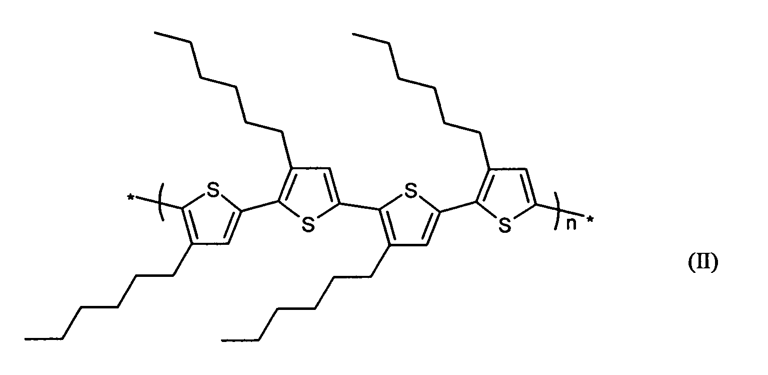 sogar Mobilitäten bis zu 0,1 cm²/Vs (Science, 1998, Band 280, S. 1741). Polyfluoren, Polyfluoren-Copolymere und Poly(3-hexylthiophen-2,5-diyl) bilden wie fast alle langkettigen Polymere nach Aufbringung aus Lösung gute Filme und sind daher einfach zu verarbeiten. Als hochmolekulare Polymere mit einer Molekulargewichtsverteilung können sie jedoch nicht durch Vakuumsublimation und nur schwer durch Chromatographie gereinigt werden.

Wichtige Vertreter oligomerer halbleitender Verbindungen sind beispielsweise Oligothiophene, insbesondere solche mit endständigen Alkylsubstituenten gemäß Formel (III) 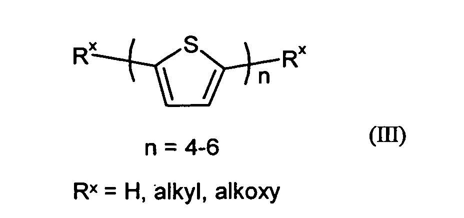 und Pentacen (IV)

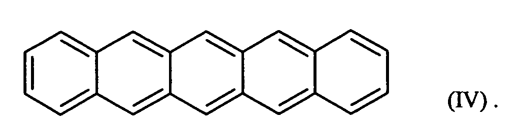

Typische Mobilitäten, für z.B. α,α'-Dihexylquarter-, -quinque- und -sexithiophen liegen bei 0.05 - 0.1 cm²/Vs.

Mesophasen, insbesondere flüssigkristalline Phasen scheinen in halbleitenden organischen Verbindungen eine besondere Rolle zu spielen, die aber bislang von den Fachleuten nicht vollständig verstanden wurde. Beispielsweise wird die bislang höchste Mobilität für Kristalle aus α,α'-Dihexylquarterthiophene berichtet (Chem. Mater., 1998, Band 10, S. 457), wobei diese Kristalle bei einer Temperatur von 80°C aus einer enantiotropen flüssigkristallinen Phase kristallisierten (Synth. Met., 1999, Band 101, S. 544). Besonders hohe Mobilitäten kann man bei Verwendung von einzelnen Kristallen erhalten, z.B. wurde eine Mobilität von 1,1 cm²/Vs für einzelne Kristalle von α,α'-Sexithiophene beschrieben (Science, 2000, Band 290, S. 963). Werden Oligomere aus Lösung aufgebracht, so sinken die Mobilitäten meist stark ab.

In der Regel wird das Absinken der halbleitenden Eigenschaften bei Prozessierung von oligomeren Verbindungen aus Lösung auf die mäßige Löslichkeit und geringe Tendenz zur Filmbildung der oligomeren Verbindungen zurückgeführt. So werden Inhomogenitäten beispielsweise auf Ausfällungen während der Trocknung aus der Lösung zurückgeführt (Chem. Mater., 1998, Band 10, S. 633).

Es hat daher Versuche gegeben, die guten Prozessierungs- und Filmbildungseigenschaften von halbleitenden Polymeren mit den Eigenschaften von halbleitenden Oligomeren zu verbinden. In der Patentschrift US-A-6.025.462 werden leitfähige Polymere mit Sternstruktur beschrieben, die aus einem verzweigten Kern und einer Schale aus konjugierten Seitengruppen bestehen. Diese weisen allerdings einige Nachteile auf. Werden die Seitengruppen aus seitlich unsubstituierten konjugierten Strukturen gebildet, so sind die resultierenden Verbindungen schwer- oder unlöslich und nicht verarbeitbar. Substituiert man die konjugierten Einheiten mit Seitengruppen, so führt dies zwar zu einer verbesserten Löslichkeit, jedoch bewirken die Seitengruppen durch ihren sterischen Bedarf eine innere Unordnung und morphologische Störungen, welche die halbleitenden Eigenschaften dieser Verbindungen beeinträchtigen.

Die Offenlegungsschrift WO 02/26859 A1 beschreibt Polymere aus einem konjugierten Rückrad, an das aromatische konjugierte Ketten angebracht werden. Die Polymere tragen Diarylamin Seitengruppen, die eine Elektronenleitung ermöglichen. Diese Verbindungen sind jedoch aufgrund der Diarylaminseitengruppen als Halbleiter ungeeignet.

Die Offenlegungsschrift EP-A 1 398 341 beschreibt halbleitende Dendrimere, die aus Lösung prozessiert werden können.

Es besteht jedoch Bedarf an weiteren verbesserten Verbindungen, welche die halbleitenden Eigenschaften bekannter Oligomere mit der Prozessierbarkeit und den guten Filmbildungseigenschaften bekannter Polymere verbinden.

Die Aufgabe der Erfindung besteht darin weitere organische Verbindungen zur Verfügung zu stellen, die aus gängigen Lösungsmitteln prozessiert werden können und gute halbleitende Eigenschaften besitzen. Solche organischen halbleitenden Verbindungen würden sich hervorragend für die großflächige Beschichtung eignen.

Wünschenswert wäre insbesondere, dass die Verbindungen hochwertige Schichten einheitlicher Dicke und Morphologie bilden und für elektronische Anwendungen geeignet sind.

Es wurde überraschend gefunden, dass organische Verbindungen die gewünschten Eigenschaften aufweisen, wenn sie eine Kern-Schale-Struktur aufweisen enthaltend einen Kern aufgebaut aus multifunktionalen Einheiten und eine Schale aus Verbindungsketten und linearen konjugierten oligomeren Ketten, welche jeweils an der endständigen Verknüpfungsstelle durch eine flexible nichtkonjugierte Kette abgesättigt sind.

Gegenstand der Erfindung sind makromolekulare Verbindungen mit Kern-Schale-Struktur, wobei der Kern (K) eine makromolekulare Grundstruktur aus Basis von Silizium und/oder Kohlenstoff aufweist und mit mindestens 3, insbesondere mit mindestens 6 äußeren Atomen über eine Verbindungskette (V) auf Basis von Kohlenstoff mit linearen auf Kohlenstoff basierenden oligomeren Ketten (L) mit durchgehend konjugierten Doppelbindungen verbunden ist, und wobei die konjugierten Ketten (L) jeweils an ihrem der Verbindungskette (V) entgegengesetzten Ende mit einer weiteren, insbesondere aliphatischen, araliphatischen oder oxyaliphatischen Kette (R) ohne konjugierte Doppelbindungen abgesättigt sind.

Die organischen makromolekularen Verbindungen können in einer bevorzugten Ausführungsform Oligomere oder Polymere sein. Im Rahmen der Erfindung sind unter Oligomeren Verbindungen mit einem Molekulargewicht unter 1000 Dalton zu verstehen und unter Polymeren Verbindungen mit einem mittleren Molekulargewicht von 1000 Dalton und größer. Bei dem mittleren Molekulargewicht kann es sich je nach Meßmethode um das Zahlen- (Mₙ) oder Gewichtsmittel (M_{w}) handeln. Hier ist das Zahlenmittel (Mₙ) gemeint.

Im Rahmen der Erfindung handelt es sich bei der Kern-Schale-Struktur um eine Struktur auf molekularer Ebene, d.h. sie bezieht sich auf den Aufbau eines Moleküls als solches.

Unter der endständigen Verknüpfungsstelle der linearen konjugierten oligomeren Kette ist die Stelle in der endständigen Einheit der linearen oligomeren Kette mit konjugierten Doppelbindungen zu verstehen, über die keine weitere Verknüpfung einer weiteren mehr erfolgt. Endständig ist im Sinne von am weitesten vom Kern entfernt zu verstehen. Die lineare oligomere Kette mit durchgehend konjugierten Doppelbindungen wird nachfolgend auch verkürzt lineare konjugierte oligomere Kette genannt.

Die neuen Verbindungen besitzen bevorzugt eine Kern-Schale-Struktur der allgemeinen Formel (Z), 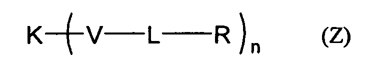 worin
- K: ein n-funktionaler Kern ist,
- V: eine Verbindungskette
- L: eine lineare konjugierte oligomere Kette ist,
- R: für lineare oder verzweigte C₂-C₂₀-Alkylreste, einfach oder mehrfach ungesättigte C₂-C₂₀- Alkenylreste, C₂-C₂₀-Alkoxyreste, C₂-C₂₀-Aralkylreste oder C₂-C₂₀-Oligo- oder C₂-C₂₀- Polyetherreste steht,
- n: für eine ganze Zahl größer oder gleich 3, bevorzugt größer oder gleich 6 steht.

Dabei wird die Schale der bevorzugten neuen Verbindungen aus den n -V-L-R Bausteinen gebildet, die jeweils an den Kern angeknüpft sind.

Für beispielsweise n gleich 3 oder 6 sind dies Strukturen der Formeln (Z-3) oder (Z-6) 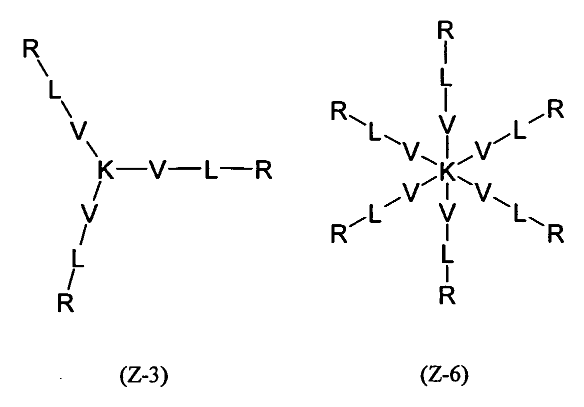 worin K, V, L und R oben genannte Bedeutung haben.

Derartige Verbindungen werden so konstruiert, dass ein aus multifunktionalen Einheiten aufgebauter, d.h. verzweigter Kern, Verbindungsketten, lineare konjugierte oligomere Ketten und nichtkonjugierte Ketten miteinander verbunden sind.

Der aus multifunktionalen Einheiten aufgebaute Kern weist bevorzugt dendritische oder hyperverzweigte Strukturen auf.

Hyperverzweigte Strukturen und ihre Herstellung sind dem Fachmann an sich bekannt. Hyperverzweigte Polymere oder Oligomere weisen eine besondere Struktur auf, die durch die Struktur der eingesetzten Monomeren vorgegeben ist. Als Monomere werden sog. ABn-Monomere eingesetzt, d.h. Monomere, die zwei verschiedene Funktionalitäten A und B tragen. Von diesen ist eine Funktionalität (A) pro Molekül nur einmal, die andere Funktionalität (B) mehrfach (n-mal) vorhanden. Die beiden Funktionalitäten A und B können miteinander unter Bildung einer chemischen Bindung umgesetzt, z.B. polymerisiert werden. Aufgrund der Monomerstruktur entstehen bei der Polymerisation verzweigte Polymere mit einer baumartigen Struktur, sogenannte hyperverzweigte Polymere. Hyperverzweigte Polymere weisen keine regelmäßigen Verzweigungsstellen, keine Ringe und praktisch ausschließlich B-Funktionalitäten an den Kettenenden auf. Hyperverzweigte Polymere, deren Struktur, die Frage der Verzweigung und deren Nomenklatur ist für das Beispiel von hyperverzweigten Polymeren auf der Basis von Siliconen in L.J. Mathias, T.W. Carothers, Adv. Dendritic Macromol. (1995), 2, 101-121 und den darin zitierten Arbeiten beschrieben.

Im Rahmen der Erfindung bevorzugte hyperverzweigte Strukturen sind hyperverzweigte Polymere.

In Sinne der Erfindung sind dendritische Strukturen synthetische makromolekulare Strukturen, die man schrittweise durch Verknüpfung von jeweils 2 oder mehr Monomeren mit jedem bereits gebundenen Monomeren aufbaut, so dass mit jedem Schritt die Zahl der Monomer-Endgruppen exponentiell anwächst und am Ende eine kugelförmige Baumstruktur entsteht. Auf diese Weise entstehen dreidimensionale, makromolekulare Strukturen mit Gruppen, die Verzweigungspunkte aufweisen und sich von einem Zentrum in regelmäßiger Art und Weise bis zur Peripherie fortsetzen. Derartige Strukturen werden üblicherweise durch den Fachmann bekannte Verfahren Schicht für Schicht aufgebaut. Die Anzahl der Schichten wird üblicherweise Generation genannt. Die Anzahl der Verzweigungen in jeder Schicht wie auch die Anzahl endständiger Gruppen erhöhen sich mit steigender Generation. Aufgrund ihres regelmäßigen Aufbaus können dentritische Strukturen besondere Vorteile bieten. Dendritische Strukturen, Herstellmethoden und Nomenklatur sind dem Fachmann bekannt und beispielsweise in G.R.Newkome et.al., Dendrimers and Dendrons, Wiley-VCH, Weinheim, 2001 beschrieben.

Die im aus dendritischen oder hyperverzeigten Strukturen aufgebauten Kern, im Folgenden auch kurz als dendritischer oder hyperverzweigter Kern bezeichnet, einsetzbaren Strukturen sind beispielweise diejenigen, die in US-A 6.025.462 beschrieben werden. Dies sind beispielsweise hyperverzweigte Strukturen wie Polyphenylene, Polyetherketone, Polyester, wie sie z.B. in US-A 5.183.862, US-A 5.225.522 und US-A 5.270.402 beschrieben werden, Aramide, wie sie z.B. in US-A 5.264.543 beschrieben werden, Polyamide, wie sie z.B. in US-A 5.346.984 beschrieben werden, Polycarbosilane oder Polycarbosiloxane, wie z.B. in US 6.384.172 beschrieben werden, oder Polyarylene, wie sie z.B. in US-A 5.070.183 oder US-A 5.145.930 beschrieben werden, oder dendritische Strukturen wie beispielsweise Polyarylene, Polyarylenether oder Polyamidoamine, wie sie z.B. in US-A 4.435.548 und US-A 4.507.466 beschrieben werden, sowie Polyethylenimine, wie sie z.B. in US-A 4.631.337 beschrieben werden.

Es können aber auch andere strukturelle Einheiten zum Aufbau des dendritischen oder hyperverzweigten Kerns verwendet werden. Die Rolle des dendritischen oder hyperverzweigten Kerns besteht vorwiegend darin, eine Reihe von Funktionalitäten zur Verfügung zu stellen und damit eine Matrix zu bilden, an denen die Verbindungsketten mit den linearen konjugierten oligomeren Ketten angebracht und somit in einer Kern-Schale-Struktur angeordnet werden können. Die linearen konjugierten oligomeren Ketten werden durch Anbringung an die Matrix vorgeordnet und erhöhen so ihre Wirksamkeit.

Der dendritische oder hyperverzweigte Kern weist eine Reihe von Funktionalitäten - im Sinne von Verknüpfungsstellen - auf, die zur Anknüpfung der Verbindungsketten mit den linearen konjugierten oligomeren Ketten geeignet sind. Insbesondere weist der dendritische Kern ebenso wie der aus hyperverzweigten Strukturen aufgebaute Kern mindestens 3, bevorzugt jedoch mindestens 6 Funktionalitäten auf.

Bevorzugte Strukturen im dendritischen oder hyperverzweigten Kern sind 1,3,5-Phenylen-Einheiten (Formel V-a) und Einheiten der Formeln (V-b) bis (V-e), wobei mehrere gleiche oder verschiedene Einheiten der Formeln (V-a) bis (V-e) miteinander verknüpft sind, 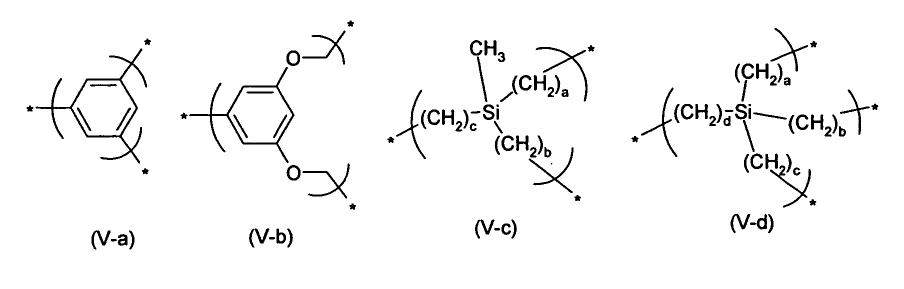 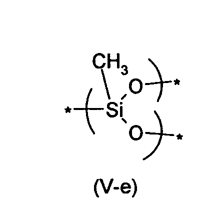 wobei in den Einheiten der Formeln (V-c) und (V-d) a, b, c und d unabhängig voneinander für 0, 1, 2 oder 3 stehen.

Die mit * gekennzeichneten Positionen in den Formeln (V-a) bis (V-e) sowie in weiteren im Folgenden verwendeten Formeln kennzeichnen die Verknüpfungsstellen. Die Einheiten (V-a) bis (V-e) werden über diese miteinander oder über die Verbindungsketten mit den linearen konjugierten oligomeren Ketten (L) verknüpft.

Beispiele für dendritische Kerne (K) aufgebaut aus Einheiten der Formel (V-a) sind folgende:

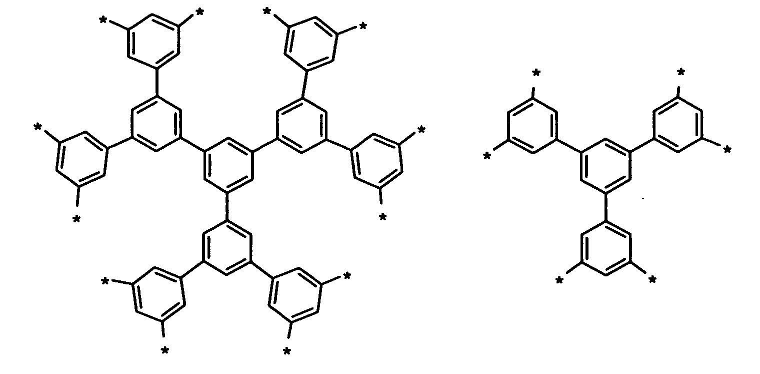

An den mit * gekennzeichneten Positionen erfolgt die Verknüpfung über die Verbindungsketten (V) mit den linearen konjugierten oligomeren Ketten (L).

Die Schale der neuen Verbindungen wird aus Verbindungsketten, linearen konjugierten oligomeren Ketten und den nichtkonjugierten Ketten gebildet.

Verbindungsketten (V) sind bevorzugt solche, die eine hohe Flexibilität, d.h. eine hohe (intra)-molekulare Beweglichkeit aufweisen und dadurch eine geometrische Anordnung der Segmente -L-R um den Kern K bewirken. Flexibel ist im Rahmen der Erfindung im Sinne von (intra)molekular beweglich zu verstehen.

Als Verbindungsketten sind grundsätzlich lineare oder verzweigte Ketten geeignet, die folgende Strukturmerkmale aufweisen:
- durch Einfachbindungen mit Kohlenstoffatomen verbundene Kohlenstoffatome,
- mit Kohlenstoff verbundene Wasserstoffatome,
- mit Kohlenstoff durch Einfachbindungen verbundene Sauerstoffatome,
- mit Kohlenstoff durch Einfachbindungen verbundene Siliziumatome und/oder
- mit Sauerstoff durch Einfachbindungen verbundene Siliziumatome,
welche bevorzugt aus insgesamt 6 bis 60 Atomen aufgebaut sind und bevorzugt keine Ringstrukturen enthalten.

Geeignete Verbindungsketten sind besonders bevorzugt lineare oder verzweigte C₂-C₂₀-Alkylenketten, wie z.B. Ethylen-, n-Butylen-, n-Hexylen-, n-Octylen und n-Dodecylen-Ketten, lineare oder verzweigte Polyoxyalkylenketten, z.B. -OCH₂-,-OCH(CH₃)- oder -O-(CH₂)₄-Segmente enthaltende Oligoetherketten, lineare oder verzweigte Siloxanketten, beispielweise solche mit Dimethylsiloxan-Struktureinheiten und/oder geradkettige oder verzweigte Carbosilanketten, d.h. Ketten, die Silizium-Kohlenstoff-Einfachbindungen enthalten, wobei die Silizium und die Kohlenstoffatome in den Ketten alternierend, statistisch oder blockartig angeordnet sein können wie z.B. solche mit -SiR₂-CH₂-CH₂-CH₂-SiR₂-Struktureinheiten.

Als lineare konjugierte oligomere Ketten sind prinzipiell sämtliche Ketten geeignet, die Strukturen aufweisen, die als solche elektrisch leitfähige bzw. halbleitende Oligomere oder Polymere bilden. Dies sind beispielsweise gegebenenfalls substituierte Polyaniline, Polythiophene, Polyethylendioxythiophene, Polyphenylene, Polypyrrole, Polyacetylene, Polyisonaphthene, Polyphenylenvinylene, Polyfluorene, die als Homopolymere oder -oligomere oder als Copolymere oder - oligomere eingesetzt werden können. Beispiele solcher Strukturen, die bevorzugt als lineare konjugierte oligomere Ketten eingesetzt werden können, sind Ketten aus 2 bis 10, besonders bevorzugt 2 bis 7 Einheiten der allgemeinen Formeln (VI-a) bis (VI-e), 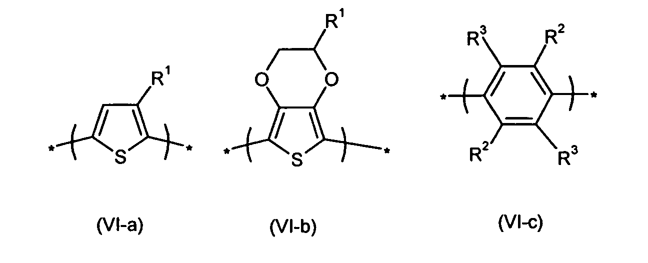 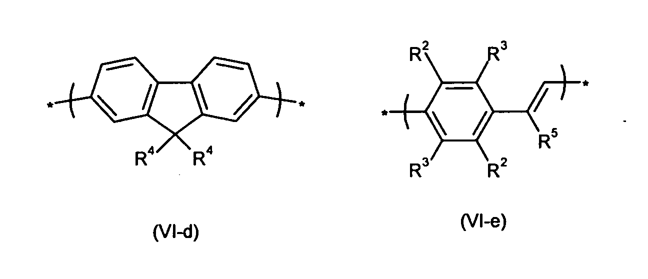 wobei
- R¹, R² und R³: gleich oder verschieden sein können und für Wasserstoff, geradkettige oder verzweigte C₁-C₂₀-Alkyl- oder C₁-C₂₀-Alkoxygruppen stehen, bevorzugt gleich sind und für Wasserstoff stehen,
- R⁴: gleich oder verschieden sein können und für Wasserstoff, geradkettigen oder verzweigten C₁-C₂₀-Alkylgruppen oder C₁-C₂₀-Alkoxygruppen, bevorzugt für Wasserstoff oder C₆-C₁₂- Alkylgruppen stehen und
- R⁵: für Wasserstoff oder eine Methyl- oder Ethylgruppe, bevorzugt für Wasserstoff steht.

Die mit * gekennzeichneten Positionen der Formeln (VI-a) bis (VI-e) kennzeichnen die Verknüpfungsstellen, über die die Einheiten (VI-a) bis (VI-e) untereinander zur linearen konjugierten oligomeren Kette verknüpft sind bzw. an den jeweiligen Kettenenden an den Kern anknüpfen oder die nichtkonjugierte Kette tragen.

Besonders bevorzugt sind lineare konjugierte oligomere Ketten mit Einheiten aus gegebenenfalls substituierten 2,5-Thiophenen (VI-a) oder (VI-b) oder gegebenenfalls substituierten 1,4-Phenylenen enthalten (VI-c). Die vorangestellten Zahlen 2,5- bzw. 1,4- geben an über welche Positionen in den Einheiten die Verknüpfung erfolgt.

Unter substituiert wird hier und im Folgenden, wenn nicht anders erwähnt, eine Substitution mit Alkyl-, insbesondere mit C₁-C₂₀-Alkylgruppen oder mit Alkoxy-, insbesondere mit C₁-C₂₀-Alkoxygruppen verstanden.

Ganz besonders bevorzugt sind lineare konjugierte oligomere Ketten mit Einheiten aus unsubstituierten 2,5-Thiophenen (VI-a) oder 2,5-(3,4-Ethylendioxythiophenen) (VI-b).

Die linearen konjugierten oligomeren Ketten, in der allgemeinen Formel (Z) mit L bezeichnet, sind an der endständigen Verknüpfungsstelle jeweils durch eine nichtkonjugierte Kette (R) abgesättigt. Nichtkonjugierte Ketten sind bevorzugt solche, die eine hohe Flexibilität, d.h. eine hohe (intra)-molekulare Beweglichkeit aufweisen, dadurch mit Lösemittelmolekülen gut wechselwirken und so eine verbesserte Löslichkeit erzeugen. Flexibel ist im Rahmen der Erfindung im Sinne von (intra)-molekular beweglich zu verstehen. Die nichtkonjugierten Ketten, welche die linearen konjugierten oligomeren Ketten an der endständigen Verknüpfungsstelle tragen, sind gegebenenfalls durch Sauerstoff unterbrochene geradkettige oder verzweigte aliphatische, ungesättigte oder araliphatische Ketten mit 2 bis 20 Kohlenstoffatomen, bevorzugt mit 6 bis 20 Kohlenstoffatomen. Bevorzugt sind aliphatische und oxyaliphatische Gruppen, d.h. Alkoxygruppen oder durch Sauerstoff unterbrochene geradkettige oder verzweigte aliphatische Gruppen wie Oligo- oder Polyether-Gruppen. Besonders bevorzugt sind unverzweigte C₂-C₂₀-Alkyl- oder C₂-C₂₀-Alkoxygruppen. Beispiele geeigneter Ketten sind Alkylgruppen wie n-Hexyl, n-Heptyl, n-Octyl, n-Nonyl, n-Decyl und n-Dodecylgruppen sowie Alkoxygruppen wie n-Hexyloxy-, n-Heptyloxy-, n-Octyloxy-, n-Nonyloxy-, n-Decyloxy- und n-Dodecyloxygruppen.

Als Beispiele für Strukturelemente L-R aus einer mit linearen konjugierten oligomeren Ketten, welche jeweils an der endständigen Verknüpfungsstelle durch eine nichtkonjugierte Kette abgesättigt sind, seien Strukturelemente der allgemeinen Formeln (VI-a-R) und (VI-b-R) genannt: 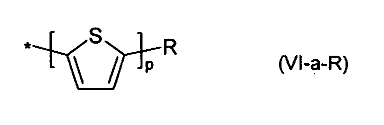 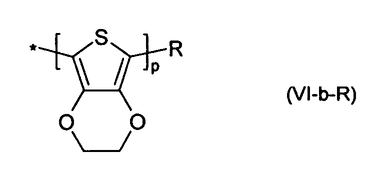 worin R die oben für die allgemeine Formel (Z) genannte Bedeutung hat und
- p: eine ganze Zahl von 2 bis 10, bevorzugt von 2 bis 7 ist.

Bevorzugte Ausführungsformen der vorliegenden Erfindung sind Verbindungen mit Strukturen, die im dendritischen Kern Siloxan- und/oder Carbosilaneinheiten, als Verbindungskette lineare, unverzweigte Alkylengruppen, als lineare konjugierte oligomere Ketten unsubstituierte Oligothiophenketten und Oligo(3,4-ethylendioxythiophen)ketten mit 2 bis 4 Thiophen- bzw. 3,4-Ethylendioxythiophen-Einheiten sowie C₆-C₁₂-Alkylgruppen als flexible nichtkonjugierte Ketten enthalten.

Beispielhaft seien dazu die folgenden Verbindungen der Formeln (Z-4-a) und (Z-X-a) genannt:

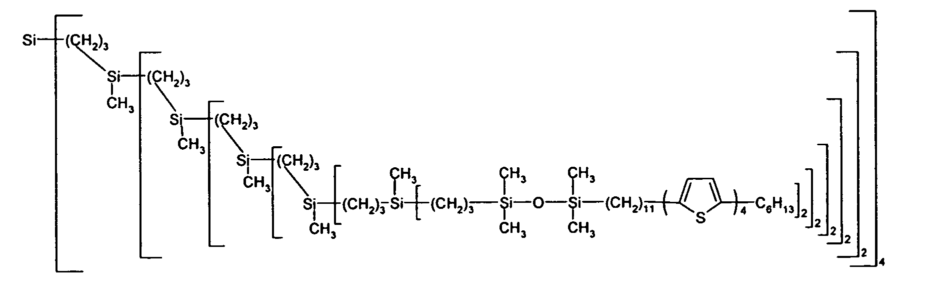

(Z-4-a)

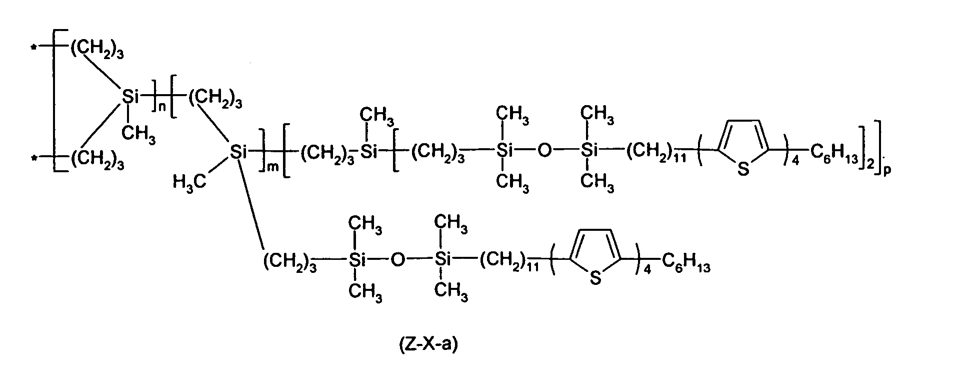

wobei in (Z-X-a) n, m und p gleich oder verschieden sein können und unabhängig voneinander für eine ganze Zahl von 1 bis 100, bevorzugt 3 bis 20, besonders bevorzugt 4 bis 12 stehen. In bevorzugten Ausführungsformen der erfindungsgemäßen Verbindungen sind wenigstens zwei der Variablen n, m und p gleich, in ganz besonders bevorzugten Ausführungsformen sind n, m und p gleich.

Die neuen Verbindungen sind bevorzugt leitfähig oder halbleitend. Besonders bevorzugter Gegenstand der Erfindung sind solche Verbindungen, die halbleitend sind. Besonders bevorzugt sind solche Verbindungen, die eine Mobilität für Ladungsträger von mindestens 10⁻⁴ cm²/Vs aufweisen. Ladungsträger sind z.B. positive Lochladungen.

Die erfindungsgemäßen makromolekularen Verbindungen sind in gängigen Lösungsmitteln, wie beispielsweise Chloroform, Toluol, Benzol, Diethylether, Dichlormethan oder Tetrahydrofuran, typischerweise gut löslich und somit hervorragend für die Prozessierung aus Lösung geeignet. Überraschend ist insbesondere, dass auch speziell neue Verbindungen mit unsubstituierten Thiophen- bzw. 3,4-Ethylendioxythiophen-Einheiten in den linearen konjugierten oligomeren Ketten eine sehr gute Löslichkeit zeigen ohne dass durch sterisch anspruchvolle Seitenketten die innere Ordnung bzw. Morphologie gestört wird. Entsprechend besitzen die neuen Verbindungen gute halbleitende sowie außerdem hervorragende Filmbildungseigenschaften. Sie eignen sich daher sehr gut für eine großflächige Beschichtung. Die erfindungsgemäßen halbleitenden Verbindungen weisen weiterhin eine hervorragende thermischen Stabilität und gutes Alterungsverhalten auf.

Auch weisen die erfindungsgemäßen Verbindungen beispielsweise gegenüber den bekannten halbleitenden Dendrimeren aus EP-A 1 398 341 den Vorteil auf, dass durch die erhöhte Flexibilität durch die zusätzliche Verbindungsketten in der Schale eine höhere Ordnung in halbleitenden Schichten enthaltend die erfindungsgemäßen Verbindungen erreicht werden kann. Dadurch können positive Auswirkungen auf die Eigenschaften der Endprodukte erzielt werden.

Für die Herstellung der erfindungsgemäßen Verbindungen sind prinzipiell unterschiedliche Verfahrenswege möglich.

Beispielsweise können zunächst die Strukturelemente V-L-R hergestellt werden und anschließend an den Kern (K) angeknüpft werden. Es kann jedoch auch zunächst ein fertiges Strukturelement V-L-R oder eine Teilstruktur von diesem beispielsweise im Falle eines dendritischen Kerns an einen Monodendron genannten Baustein geknüpft und im nächsten Schritt mehrere solcher Monodendronen zur Endstruktur vereinigt werden. Als Monodendron wird ein Baustein bezeichnet, der einen Teil der dendritischen Struktur enthält und zu einer dendritischen Struktur zusammengefügt werden kann.

Für die Eigenschaften der erfindungsgemäßen Verbindungen ist der Herstellungsweg prinzipiell nicht erheblich. Innerhalb der beschriebenen Herstellungswege sind eine Reihe von Varianten möglich. So ist es beispielsweise möglich, die Reihenfolge der einzelnen Herstellungsschritte zu verändern und beispielsweise die Anknüpfung der nichtkonjugierten flexiblen Ketten an die linearen konjugierten oligomeren Ketten als letzten Herstellungsschritt durchzuführen.

Je nach herzustellender Struktur kann es beispielsweise jedoch sinnvoll sein, die Anknüpfung der nichtkonjugierten flexiblen Ketten (R) an die linearen konjugierten oligomeren Ketten (L) zu einem frühen Zeitpunkt durchzuführen, da die flexiblen Ketten (R) die Löslichkeit der Bausteine erhöhen und dadurch die Herstellung der erfindungsgemäßen Verbindungen erleichtern.

Zum Aufbau des aus multifunktionalen Einheiten aufgebauten Kerns, zur Verknüpfung dessen mit den Verbindungsketten (V), zur Verknüpfung der Verbindungsketten (V) mit den linearen konjugierten oligomeren Ketten (L) und zur Anknüpfung der nichtkonjugierten flexiblen Ketten (R) an diese stehen eine Reihe von chemischen Reaktionen zur Verfügung, die dem Fachmann prinzipiell bekannt sind. Vorzugsweise werden als chemische Reaktionen metallorganische Reaktionen ausgeführt. Diese besitzen den Vorteil, dass sie in der Regel unter milden Reaktionsbedingungen und hochselektiv verlaufen und im vorliegenden Fall hohe Reaktionsausbeuten erhalten werden.

Es ist auch möglich, die erfindungsgemäßen Verbindungen so herzustellen, dass sich bei den Verknüpfungen erst die einzelnen Struktureinheiten K, V, L und R bilden und diese in den Ausgangsverbindungen, die miteinander zur Reaktion gebracht werden nur als Teilstrukturen oder in funktionalisierter Form vorliegen. So kann beispielsweise eine lineare oligomere Kette (L) erst durch Zusammenfügen zweier gegebenenfalls für die Verknüpfung funktionalisierter Kettenbausteine erst gebildet werden. Auch bei dieser Vorgehensweise zum Aufbau der erfindungsgemäßen Verbindungen werden als bevorzugte chemische Reaktionen metallorganische Reaktionen ausgeführt.

Weiterhin Gegenstand der Erfindung ist somit ein Verfahren zur Herstellung der erfindungsgemäßen Verbindungen dadurch gekennzeichnet, dass diese durch metallorganische Reaktionen hergestellt werden.

Für metallorganische Reaktionen ist es gegebenenfalls notwendig, entsprechende Funktionalitäten in den dendritischen oder hyperverzweigten Kern, die Verbindungsketten, die linearen konjugierten oligomeren Ketten und die flexiblen nichtkonjugierten Ketten einzubringen und diese anschließend miteinander zu verknüpfen.

Derartige Funktionalitäten sind beispielsweise Alkenylgruppen, Halogengruppen, beispielsweise Chlor-, Brom- und Iodgruppen, vorzugsweise Bromgruppen, zinnorganische Gruppierungen wie z.B. die Trimethyl- oder Triethylzinngruppe, siliziumorganische Gruppierungen wie z.B. die Trimethylsilan- oder Triethylsilangruppe oder bororganische Gruppierungen wie z.B. Boronsäuren.

Besonders bevorzugte metallorganische Reaktionen zum Kuppeln der einzelnen Bauteile der erfindungsgemäßen Verbindungen sind die Kumada-Kupplung, in der zwei Bromgruppen über Grignard-Verbindungen unter Verwendung von Palladium-Katalysatoren, wie z.B. 1,1-Bis-(diphenylposphino)ferrocendichlorpalladium(II), gekuppelt werden und die Suzuki-Kupplung, in der borhaltige Gruppen mit Bromgruppen basisch unter Verwendung von Palladiumkatalysatoren gekuppelt werden. Beide Kupplungsreaktionen sind dem Fachmann in ihrer Durchführung bekannt. Auch die Hydrosilylierung von Alkenylgruppen ist eine bevorzugte metallorganische Reaktion zur Verknüpfung einzelner Bausteine bei der Herstellung der erfindungsgemäßen Verbindungen. Auch die Durchführung von Hydrosilylierungen ist dem Fachmann bekannt.

Beispielhafte Ausführungsformen des erfindungsgemäßen Verfahrens werden in den Beispielen beschrieben.

Bevorzugt werden die Zwischenstufen zwischen den einzelnen Herstellungsschritten sowie die Endverbindungen gereinigt. Dies kann nach den bekannten Methoden der Destillation, Sublimation, Rekristallisation, Extraktion, Umfällung, Waschen oder Chromatographie erfolgen. Bevorzugt werden Zwischenstufen und Endverbindungen durch Destillation, Sublimation und Chromatographie gereinigt, da hierdurch die höchsten Reinheiten erhalten werden können.

Dies bietet gegenüber den bekannten halbleitenden Polymeren den Vorteil, das über einfache gängige Reinigungsverfahren die erfindungsgemäßen Verbindungen in hohen Reinheiten hergestellt werden können und so für die Anwendung in der Halbleitertechnik geeignet sind.

Die erfindungsgemäßen Verbindungen können Mesophasen (mesomorphe Phasen), d.h. physikalische Phasen zwischen dem festen und flüssigen Zustand, bilden. Diese werden auch als flüssigkristalline Phasen bezeichnet und unterstützen eine Vorordnung der erfindungsgemäßen Verbindungen. Bevorzugt bilden die erfindungsgemäßen Verbindungen flüssigkristalline Phasen im Bereich zwischen 50°C und 300°C, ganz besonders bevorzugt zwischen 80°C und 180°C.

Die erfindungsgemäßen Verbindungen sind in üblichen Lösungsmitteln, z.B. in Chloroform, Toluol, Benzol, Diethylether, Dichlormethan oder Tetrahydrofuran, zu mindestens 0.1 % bevorzugt mindestens 1 %, besonderes bevorzugt mindestens 5 % löslich.

Die erfindungsgemäßen Verbindungen bilden aus verdampften Lösungen hochwertige Schichten einheitlicher Dicke und Morphologie und sind daher für elektronische Anwendungen geeignet.

Weiterhin Gegenstand der Erfindung ist schließlich die Verwendung der erfindungsgemäßen Verbindungen als Halbleiter in elektronischen Bauelementen wie Feld-Effekt-Transistoren, lichtemittierenden Bauelementen, wie organischen Lumineszenzdioden, oder photovoltaischen Zellen, Lasern und Sensoren.

Bevorzugt werden die erfindungsgemäßen Verbindungen in Form von Schichten für diese Zwecke verwendet.

Um als Halbleiter sinnvoll eine Funktionalität sicherstellen zu können, weisen die erfindungsgemäßen Verbindungen eine ausreichende Mobilität, z.B. mindestens 10⁻⁴ cm²/Vs auf. Ladungsmobilitäten können beispielsweise wie in M.Pope and C.E.Swenberg, Electronic Processes in Organic Crystals and Polymers, 2nd ed., S. 709 -713 (Oxford University Press, New York Oxford 1999) beschieben, bestimmt werden.

Zur Verwendung werden die erfindungsgemäßen Verbindungen auf geeignete Substrate, zum Beispiel auf mit elektrischen oder elektronischen Strukturen versehene Silizium-Wafer, Polymerfolien oder Glasscheiben, aufgetragen. Für den Auftrag kommen prinzipiell sämtliche Auftragsverfahren in Betracht. Vorzugsweise werden die erfindungsgemäßen Verbindungen aus flüssiger Phase, d.h. aus Lösung, aufgetragen und das Lösungsmittel anschließend verdampft. Das Aufbringen aus Lösung kann nach den bekannten Verfahren, beispielsweise durch Sprühen, Tauchen, Drucken und Rakeln erfolgen. Besonders bevorzugt ist das Aufbringen durch Spin-Coating und durch Ink-Jet-Druck.

Die Schichten der erfindungsgemäßen Verbindungen können nach dem Aufbringen weiter modifiziert werden, beispielsweise durch eine Temperaturbehandlung, z.B. unter Durchlaufen einer flüssigkristallinen Phase oder zur Strukturierung z.B. durch Laserablation.

Weiterhin Gegenstand der Erfindung sind elektronische Bauelemente enthaltend die erfindungsgemäßen Verbindungen als Halbleiter.

### Beispiele

5-(10-Undecenyl)-2,2'-bithiophen wurde nach bekannten Verfahren hergestellt (Synthesis, 1993, S.1099, J. Mater. Chem. 2003, Band 13, S. 197). Die Synthese des Carbosilan-Dendrimeren G5(All)128 (s. Beispiel 2A) und des hyperverzweigten Carbosilan-Polymeren Si-Hyper-Allyl (s. Beispiel 2B) ist in Polym. Sci. Ser. A, 1998, Band 40, S 763 und J. Polym. Sci., Part A, 2000, Band 38 S. 741 beschrieben. Alle Reaktionsgefäße wurden vor Gebrauch nach üblicher Schutzgastechnik ausgeheizt und mit Stickstoff geflutet.

### Beispiel 1: Herstellung einer Verbindung mit V-L-R-Struktur

### Beispiel 1A: Herstellung von 4,4,5,5-Tetramethyl-2-[5'-(10-undecenyl)-2,2'-bithien-5-yl]-1,3,2-dioxaborolan (Und-2T-Bor)

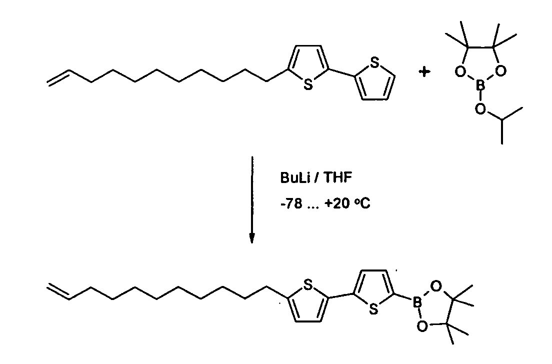

In einem trockenen und mit Stickstoff gefüllten 500 ml-Kolben mit mechanischer Rührung wurden 100 ml wasserfreies Tetrahydrofuran mittels Trockeneis/Aceton auf -75 °C gekühlt. 6,4 ml 2,5m Butyllithium-Lösung in Hexan wurden hinzugetropft und 20 Minuten nachgerührt. Anschließend wurde eine Lösung von 5-undecenyl-2,2-bithiophene (5,10 g, 16,0 mmol) in 120 ml wasserfreiem Tetrahydrofuran über 1,5 h zugetropft und. 30 min bei -75°C nachgerührt. Anschließend wurde über 1 h auf 0°C erwärmt und die klargelbe Lösung wieder auf -75°C gekühlt. 3,91 g Isopropoxydioxaborolan wurden portionsweise so zugesetzt, dass die Temperatur der Lösung nicht über -72°C stieg und nach beendeter Zugabe 30 min bei -72°C nachgerührt. Es wurde weiter gerührt und das Kühlbad entfernt, wobei sich die Reaktionsmischung langsam erwärmte. Nach 3 h wurde die Reaktionsmischung in 500 ml Diethylether gegeben, ein Gemisch aus 200 ml eiskaltem Wasser und 16 ml 1N Salzsäure zugesetzt, geschüttelt und die Phasen getrennt. Die organische Phase wurde zweimal mit je 200 ml Wasser gewaschen, mit wasserfreiem Natriumsulfat getrocknet, filtriert und das Lösungsmittel entfernt. Man er hielt 7,35 g blauen Feststoff als Produkt.

¹H NMR (CDCl₃, TMS/ppm): 1.22-1.45 (überlappende Peaks mit einem Maximum bei 1.283, 14H), 1.345 (s, 12 H), 1.672 (m, J=7.5 Hz, M = 5, 2H), 2.037 (q, J=7.2 Hz, 2H), 2.781 (t, J=7.3 Hz, 2H), 4.928 (d, J=10.3 Hz, 1H), 4.991 (d, J=17.1 Hz, 1H), 5.811 (m, 1H), 6.676 (d, J=3.4 Hz, 1H), 7.037 (d, J=3.9 Hz, 1H), 7.152 (d, J=3.9 Hz, 1H), 7.496 (d, J=3.4 Hz, 1H).

### Beispiel 1B: Herstellung von 5-hexyl-5'''-undec-10-en-1-yl-2,2':5',2":5",2'''-quaterthiophene (Und-4T-Hex)

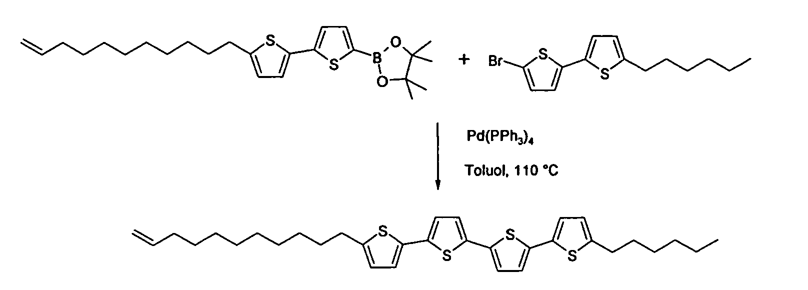

In einer trockenen und mit Stickstoff gefüllten Apparatur aus 250 ml Dreihalskolben mit magnetischer Rührung, Rückflusskühler und Septum-Einlass wurden 4,61 g 2-Hexyl-5-bromobithiophen vorgelegt, mit Stickstoff gesättigt und unter Stickstoff 0,090 g Tetrakis-(triphenylphosphino)palladium hinzugegeben. Nacheinander wurde eine Lösung aus 7,35 g der Verbindung aus Beispiel 1A, 120 ml Toluol unter Stickstoff und 21 ml einer 2 M Natriumcarbonatlösung unter Stickstoff durch den Septum-Einlass mittels Spritzen zugesetzt und über Nacht unter Rückfluss erhitzt. Nach Abkühlung wurde das Reaktionsgemisch zu 200 ml eiskaltem Wasser, 45 ml 1 N Salzsäure und 300 ml Toluol gegeben, geschüttelt und mit zweimal mit 200 ml Wasser gewaschen. Der entstehende gelbe Niederschlag wurde abfiltriert, in 350 ml Toluol gelöst, über Magnesiumsulfat getrocknet, filtriert und das Lösungsmittel entfernt. Man erhielt 1,28 g gelben Feststoff (Und-4T-Hex)¹.

Die organische flüssige Phase wurde über Magnesiumsulfat getrocknet, filtriert, das Lösungsmittel entfernt und der Rückstand aus 900 ml n-Hexan rekristallisiert. Man erhielt 5,8 g braungelben Feststoff (Und-4T-Hex)². Nach wiederholter Rekristallisation aus Toluol erhielt man 4,81 g des gelbes Pulver, das gemäß Analyse aus (Und-4T-Hex) und Triphenylphosphin bestand. Ausbeute: 1,28 + 4,81 = 6,09 g (77 % der Theorie)

MS (Und-4T-Hex)¹: M/z = 566 (M^{•+}) + Spuren von 582 und 634.

¹H NMR ((Und-4T-Hex)¹, CDCl₃, TMS/ppm): 0.896 (t, J=6.9, 3H), 1.23 - 1.44 (überlappende Peaks mit einem Maximum bei 1.289, 18 H), 1.682 (m, J= 7.3, M=5, 4H), 2.040 (q, J=7.0, 2H), 2.791 (t, J=7.6, 4H), 2.840 (q, J=7.2, 2H), 4.931 (d, J=9.8, 1H), 4.989 ( d, J=17.1, 1H), 5.814 (m, 1H), 6.681 (d, J=3.9, 2H), 6.975 (d, J=3.4, 2H), 6.988 (d, J=3.9, 2H), 7.029 (d, J=3.9, 2H).

### Beispiel 1C: Herstellung von 1-[11-(5'''-hexyl-2,2':5',2":5",2'''-quaterthien-5-yl)undecyl]-1,1,3,3-tetramethyldisiloxane (HSi-Und-4T-Hex)

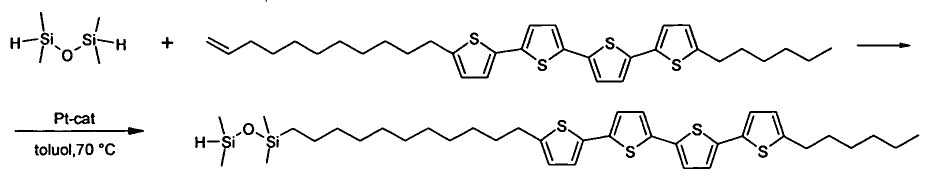

In einem trockenen und mit Stickstoff gefüllten 250 ml 3-Halskolben mit Magnetrührer, Rückflusskühler, Stickstoff-Einlass und Thermometer wurden 1,25 g der Verbindung aus Beispiel 1B (Und-4T-Hex) und 40 ml wasserfreiem Toluol vorgelegt, die Lösung mit Stickstoff gesättigt und auf 70°C erhitzt. In die klare Lösung wurden 16 ml (12,0 g) Tetramethylsiloxan und 10 µl Platin-Cyclovinylmethylsiloxan-Komplex in Cyclomethylvinylsiloxanen mit 3-3.5%Pt) (Fa. ABCR, Karlsruhe) zugefügt und 21 h gerührt. Nach Entfernung des Lösemittels wurden 2,59 g gelber Feststoff erhalten, der in heißem Toluol gelöst bei 50°C an Kieselgel chromatographiert wurde. Man erhielt 1,365 g (87 % d. Th.) gelben Feststoff.

FD MS: Haupt-Peak mit M/z = 700 (M^{•+}), kleinere Mengen an M/z = 566 und Spuren von M/z = 714, 774 und 903.

¹H NMR (CDCl₃, TMS/ppm): 0.056 (s, 6H), 0.160 (d, J=2.5 Hz, 6H), 0.526 (t, J=7.6 Hz, 2H), 0.896 (t, J=6.85, 3H), 1.21 - 1.44 (überlappende Peaks mit einem Maximum bei 1.268, 22 H), 1.681 (m, J= 7.5, M=5, 4H), 2.789 (t, J=7.6 Hz, 4H), 4.676 (m, J=2.8 Hz, M=7, 1H), 6.680 (d, J=3.9, 2H), 6.974 (d, J=3.4, 2H), 6.987 (d, J=3.9, 2H), 7.028 (d, J=3.4, 2H).

### Beispiel 2: Herstellung von erfindungsgemäßen Verbindungen mit K-(V-L-R)ₙ-Struktur

### Beispiel 2A: Herstellung einer erfindungsgemäßen Verbindung K-(V-L-R)ₙ-Struktur mit dendritischem Kern

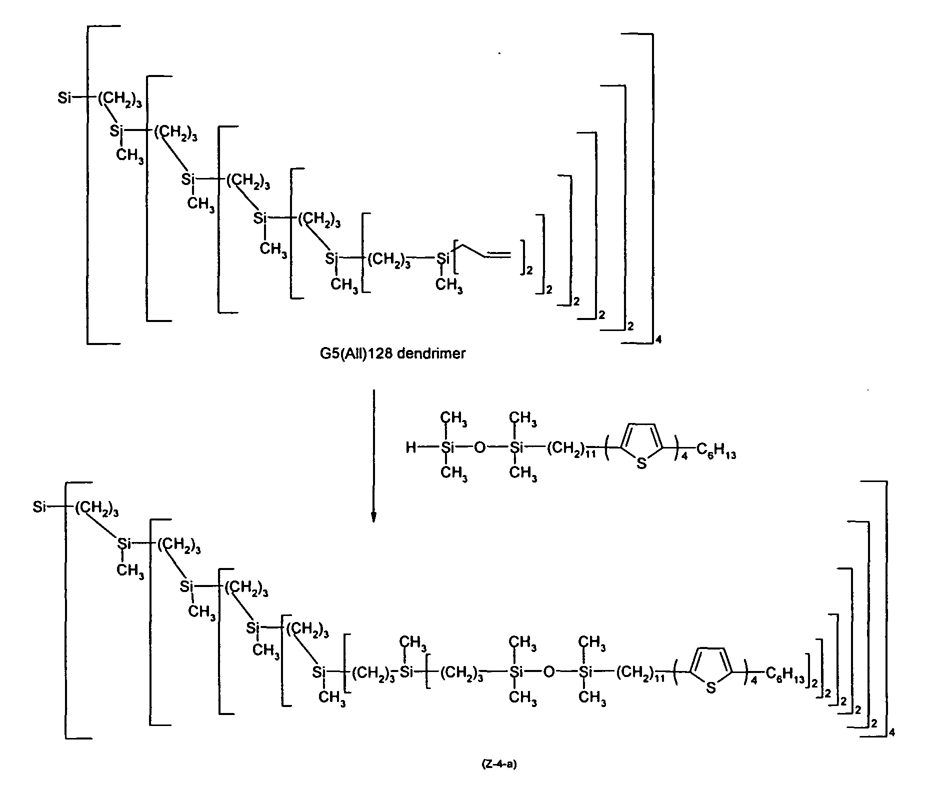

In einem trockenen und mit Stickstoff gefüllten 100 ml 3-Halskolben mit Magnetrührer, Rückflusskühler, Stickstoff-Einlass und Thermometer wurden 702 mg (1,0 mmol) der Verbindung aus Beispiel 1C (HSi-Und-4T-Hex), mit Stickstoff gesättigt und 1,3 ml (82 mg Feststoff) einer Lösung von G5(All)128 Dendrimer hinzugefügt. Das Lösemittel wurde im Vakuum entfernt, der Kolben mit Stickstoff gefüllt, 17 ml wasserfreies Toluol hinzugefügt und die Lösung mit Stickstoff gesättigt. Die Mischung wurde auf 60°C erhitzt, zur klaren Lösung 10 µl Platin-Divinyltetramethylsiloxane-Komplex in Xylol (Fa. ABCR, Karlsruhe) mit 2-2.4%Pt hinzugefügt und die Lösung 20 h zum auf 80°C erhitzt. Anschließend wurden 70 ml Ethanol zugefügt, 4 h unter Rückfluss erhitzt, die entstandene Suspension heiß filtriert und der Filterrückstand im Hochvakuum getrocknet (625 mg gelber Feststoff, (Z-4-a)¹). Vom Filtrat wurde das Lösemittel entfernt (216 mg Rückstand)

(Z-4-a)¹ wurde in 15 ml Toluol bei 80°C gelöst und 70 ml Ethanol tropfenweise zugegeben. Es entstand eine Suspension, die filtriert wurde. Der Filterrückstand wurde im Hochvakuum getrocknet und vom Filtrat das Lösemittel entfernt. Diese Prozedur wurde zweimal wiederholt. Man erhielt 486 mg (92 % der Theorie) gelben Feststoff (Z-4-a)².

### Beispiel 2B: Herstellung einer erfindungsgemäßen Verbindung K-(V-L-R)ₙ-Struktur mit hyperverzweigtem Kern

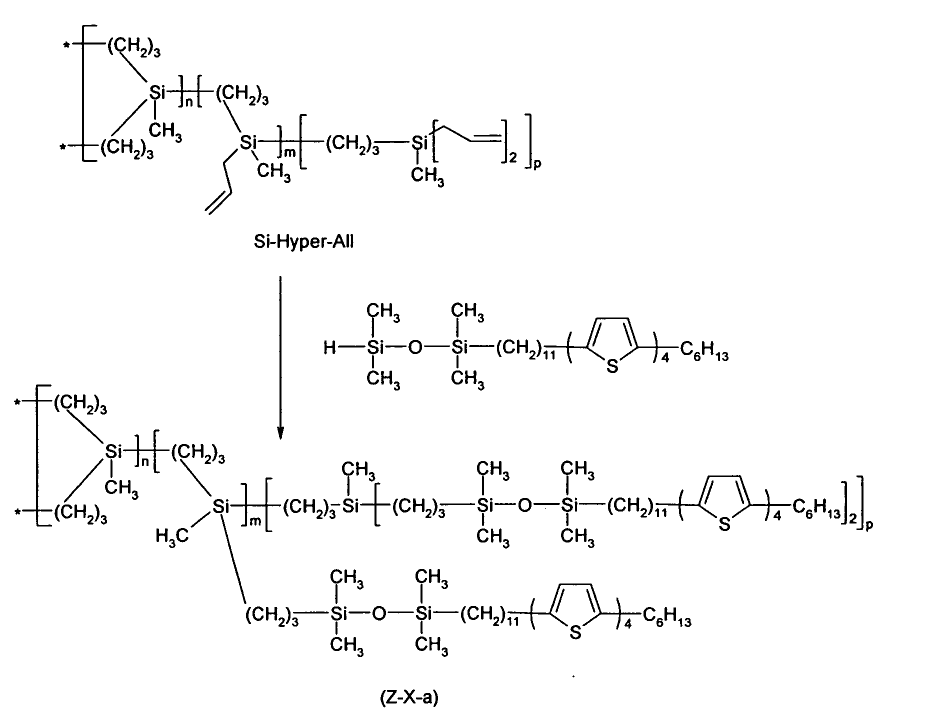

mit Mₙ = 11800 und M_{w} = 28400 und wobei n, m, p im Bereich von 1 bis 100 variieren.

Die Summenformel der Ausgangsverbindungen (Si-Hyper-All) entspricht allgemein:

Siₙ(CH₃)ₙ Hₙ₋₁[-(CH₂)₃-]ₙ₋₁ [-(CH₂)₃-]ₙ₊₁

Wie in Beispiel 2A beschrieben wurden 631 mg der Verbindung aus Beispiel 1C (HSi-Und-4T-Hex, 0,9 mmol), 76 mg des hyperverzweigten Polymers Si-Hyper-Allyl (76 mg, 0,6 mmol AllylGruppen) und 10 µl Platin-Divinyltetramethylsiloxane-Komplex in Xylol mit 2-2.4 % Pt (Fa. ABCR, Karlsruhe) in 15 ml wasserfreiem Toluol umgesetzt und isoliert. Ausbeute: 465 mg (94 % der Theorie) der Verbindung (Z-X-a).

## Patentansprüche

1. Makromolekulare Verbindungen mit Kern-Schale-Struktur, wobei der Kern eine makromolekulare Grundstruktur aus Basis von Silizium und/oder Kohlenstoff aufweist und mit mindestens 3, insbesondere mit mindestens 6 äußeren Atomen über eine Verbindungskette auf Basis von Kohlenstoff mit linearen auf Kohlenstoff basierenden oligomeren Ketten mit durchgehend konjugierten Doppelbindungen verbunden ist, und wobei die konjugierten Ketten (L) jeweils an ihrem der Verbindungskette entgegengesetzten Ende mit einer weiteren, insbesondere aliphatischen, araliphatischen oder oxyaliphatischen Kette ohne konjugierte Doppelbindungen abgesättigt sind.

2. Verbindungen gemäß Anspruch 1 **dadurch gekennzeichnet, dass** sie eine Kern-Schale-Struktur der allgemeinen Formel (Z) besitzen, 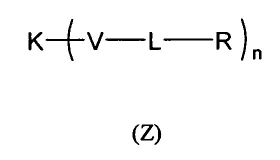 worin
K ein n-funktionaler Kern ist,
V eine Verbindungskette
L eine lineare konjugierte oligomere Kette ist,
R für geradkettige oder verzweigte C₂-C₂₀-Alkylreste, einfach oder mehrfach unge- sättigte C₂-C₂₀-Alkenylreste, C₂-C₂₀-Alkoxyreste, C₂-C₂₀-Aralkylreste oder C₂-C₂₀- Oligo- oder C₂-C₂₀-Polyetherreste steht,
n für eine ganze Zahl größer oder gleich 3 steht.

3. Verbindungen gemäß Anspruch 1 oder 2, **dadurch gekennzeichnet, dass** der Kern eine dendritische Struktur aufweist.

4. Verbindungen gemäß Anspruch 3, **dadurch gekennzeichnet, dass** der Kern als Basis für die dendritische Struktur 1,3,5-Phenylen-Einheiten enthält.

5. Verbindungen gemäß Anspruch 1 oder 2, **dadurch gekennzeichnet, dass** der Kern eine hyperverzweigte Struktur aufweist.

6. Verbindungen gemäß Anspruch 5, **dadurch gekennzeichnet, dass** die hyperverzweigte Struktur durch ein hyperverzweigtes Polymer gebildet ist.

7. Verbindungen gemäß wenigstens einem der Ansprüche 1 bis 6, **dadurch gekennzeichnet, dass** die Schale als lineare konjugierte oligomere Ketten Ketten mit Einheiten aus gegebenenfalls substituierten 2,5-Thiophenen oder gegebenenfalls substituierten 1,4-Phenylenen enthält.

8. Verbindungen gemäß wenigstens einem der Ansprüche 1 bis 7, **dadurch gekennzeichnet, dass** die Schale als lineare konjugierte oligomere Ketten Ketten mit Einheiten aus unsubstituierten 2,5-Thiophenen oder 2,5-(3,4-Ethylendioxythiophenen) enthält.

9. Verbindungen gemäß wenigstens einem der Ansprüche 1 bis 8, **dadurch gekennzeichnet, dass** die linearen konjugierten oligomeren Ketten Ketten mit einer Kettenlänge von 2 bis 7 monomeren Einheiten sind.

10. Verbindungen gemäß wenigstens einem der Ansprüche 1 bis 9, **dadurch gekennzeichnet, dass** die linearen konjugierten oligomeren Ketten jeweils an den endständigen Verknüpfungspositionen durch gleiche oder verschiedene, verzweigte oder unverzweigte Alkyl- oder Alkoxygruppen abgesättigt sind.

11. Verbindungen gemäß Anspruch 10, **dadurch gekennzeichnet, dass** die Alkyl- oder Alkoxygruppen unverzweigte C₂-C₂₀-Alkyl- oder C₂-C₂₀-Alkoxygruppen sind.

12. Verbindungen gemäß Anspruch 10 oder 11, **dadurch gekennzeichnet, dass** die Alkyl- oder Alkoxygruppen n-Hexyl, n-Decyl- oder n-Dodecylgruppen sind.

13. Verbindungen gemäß wenigstens einem der Ansprüche 1 bis 12, **dadurch gekennzeichnet, dass** die Verbindungsketten V lineare oder verzweigte C₂-C₂₀-Alkylenketten, bevorzugt Ethylen-, n-Butylen-, n-Hexylen-, n-Octylen oder n-Dodecylen-Ketten, lineare oder verzweigte Polyoxyalkylenketten, bevorzugt -OCH₂-,-OCH(CH₃)- oder -O-(CH₂)₄-Segmente enthaltende Oligoetherketten, lineare oder verzweigte Siloxanketten, bevorzugt solche mit Dimethylsiloxan-Struktureinheiten und/oder lineare oder verzweigte Carbosilanketten sind

14. Verbindungen gemäß wenigstens einem der Ansprüche 1 bis 13, **dadurch gekennzeichnet, dass** sie halbleitend sind.

15. Verbindungen gemäß wenigstens einem der Ansprüche 1 bis 14, **dadurch gekennzeichnet, dass** sie eine Mobilität für Ladungsträger von mindestens 10⁻⁴ cm²/Vs aufweisen.

16. Verfahren zur Herstellung der Verbindungen gemäß wenigstens einem der Ansprüche 1 bis 15, **dadurch gekennzeichnet, dass** die Oligomeren oder Polymeren durch metallorganische Reaktionen hergestellt werden.

17. Verfahren zur Herstellung der Verbindungen gemäß Anspruch 16, **dadurch gekennzeichnet, dass** die Oligomeren oder Polymeren unter Verwendung der Kumada-Kupplung hergestellt werden.

18. Verfahren zur Herstellung der Verbindungen gemäß Anspruch 16, **dadurch gekennzeichnet, dass** die Oligomeren oder Polymeren unter Verwendung der Suzuki-Kupplung hergestellt werden.

19. Verwendung der makromolekularen Verbindungen gemäß wenigstens einem der Ansprüche 1 bis 15 als Halbleiter in elektronischen Bauelementen.

20. Verwendung gemäß Anspruch 19, **dadurch gekennzeichnet, dass** die Bauelemente Feld-Effekt-Transistoren, lichtemittierende Bauelemente insbesondere organische Lumineszenzdioden, oder photovoltaische Zellen, Laser und Sensoren sind.

21. Verwendung gemäß Anspruch 19 oder 21. **dadurch gekennzeichnet, dass** die Verbindungen in Form von Schichten aus Lösungen auf das Baulelement aufgebracht sind.

22. Elektronische Bauelemente enthaltend Verbindungen gemäß wenigstens einem der Ansprüche 1 bis 15 als Halbleiter.
